# EUROPÄISCHE PATENTSCHRIFT

(11) **EP 2 683 250 B1**
(45) Veröffentlichungstag und Bekanntmachung des Hinweises auf die Patenterteilung: **17.09.2014**
(21) Anmeldenummer: 12710442.0
(22) Anmeldetag: 07.03.2012
(51) Int. Cl.: A23C 9/142, A23J 1/20

(54) **VERFAHREN ZUR GEWINNUNG EINES INHALTSSTOFFES AUS MOLKENPROTEINKONZENTRAT**
PROCESS FOR OBTAINING A CONSTITUENT FROM WHEY PROTEIN CONCENTRATE
PROCÉDÉ D'OBTENTION D'UN COMPOSANT À PARTIR D'UN CONCENTRÉ DE PROTÉINES DE LACTOSÉRUM

(30) Priorität: 07.03.2011 EP 11001863
(43) Veröffentlichungstag der Anmeldung: 15.01.2014
(73) Patentinhaber: Molkerei Alois Müller GmbH & Co. KG, 86850 Aretsried (DE)
(72) Erfinder: LEHMANN, Hanno, 59846 Sundern (DE)
(74) Vertreter: Leinweber & Zimmermann
(86) Internationale Anmeldenummer: PCT/EP2012/001013
(87) Internationale Veröffentlichungsnummer: WO 2012/119768

(56) Entgegenhaltungen:
- WO-A1-02/080695
- DE-A1- 3 800 468
- KIESNER C: "AKTUELLE ENTWICKLUNGEN IN DER VERARBEITUNGSTECHNIK VON MILCH UND MILCHERZEUGNISSEN", KIELER WIRTSCHAFTLICHE FORSCHUNGSBERICHTE, VERLAG TH. MANN, GELSENKIRCHEN, DE, Bd. 53, Nr. 1, 1. Januar 2001 (2001-01-01) , Seiten 43-68, XP008016245, ISSN: 0023-1347

## Beschreibung

Die Erfindung bezieht sich auf ein Verfahren zur Gewinnung eines Inhaltsstoffes aus einem als Retentat einer Ultrafiltration von Molke gewonnenen Molkenproteinkonzentrat, bei dem das Molkenproteinkonzentrat als Zulaufstrom einer Mikrofiltration zugeführt und aus deren Retentatstrom ein fettreduzierter Teilstrom separiert und mindestens teilweise zu der Mikrofiltration rezirkuliert wird.

Ein bei derartigen bekannten Verfahren als Retentat einer Ultrafiltration von Molke gewonnenes Molkenproteinkonzentrat wird abkürzend auch als "WPC" (Whey Protein Concentrate) bezeichnet. Es enthält neben einem gegenüber Molke erhöhten Eiweißanteil auch einen Anteil von Restfetten der Molke. Die Erhöhung der Eiweißkonzentration ist insbesondere für Ernährungszwecke wünschenswert, wogegen der Fettanteil unerwünscht ist. Zur Verringerung dieses unerwünschten Fettanteils wird das Molkenproteinkonzentrat einer Mikrofiltration unterzogen. Im Permeat dieser Mikrofiltration ist der Fettanteil gegenüber dem des Molkenproteinkonzentrats stark herabgesetzt, so daß aus diesem Permeat ein stark fettreduziertes, eiweißangereichertes Erzeugnis gewonnen werden kann. Bei der Mikrofiltration geht jedoch ein nennenswerter Anteil an Eiweiß an das Retentat der Mikrofiltration verloren, wodurch die Gesamtausbeute herabgesetzt wird.

Ein bekanntes Verfahren der eingangs genannten Art (WO 02/080695 A1) beruht auf einer einstufigen Fettabreicherung in einem Tellerseparator. Diesem Tellerseparator wird das Retentat der Mikrofiltration nach Durchgang durch einen Wärmetauscher zugeführt. Der von dem Tellerseparator abgetrennte fettabgereicherte Teilstrom wird nach Durchgang durch den Wärmetauscher zu dem Eingang der Mikrofiltration zurückgeführt.

Bei einem bekannten Verfahren zur Reduzierung des Restfettgehaltes von Molke (DE 38 00 468 A1) wird der pH-Wert der Molke angehoben sowie durch Zugabe von Calcium und Erhitzung eine Aggregation der Lipoproteine bewirkt und deren Abtrennung aus der solchermaßen behandelten Molke in einem Tellerseparator vorgenommen.

Der Erfindung liegt die Aufgabe zugrunde, bei einem Verfahren der eingangs genannten Art die Gesamtausbeute zu verbessern.

Erfindungsgemäß wird diese Aufgabe dadurch gelöst, daß der Retentatstrom in einer ersten Stufe in einen ersten fettangereicherten Teilstrom und einen ersten fettabgereicherten Teilstrom separiert, der erste fettabgereicherte Teilstrom in einer zweiten Stufe in einen zweiten fettangereicherten Teilstrom und einen zweiten fettabgereicherten Teilstrom separiert und der rezirkulierte Teilstrom aus dem zweiten oder aus dem ersten und dem zweiten fettabgereicherten Teilstrom gespeist wird.

Bei der Mikrofiltration geht ein Teil der in dem zulaufenden Molkenproteinkonzentrat enthaltenen Inhaltsstoffe, insbesondere des Eiweißes, in den Retentatstrom über. Dadurch verringert sich der in dem Permeatstrom ausgetragene Eiweißanteil. In der Praxis liegt die Eiweißausbeute im Permeatstrom im Bereich von 75 bis 80 % des in dem zulaufenden Molkenproteinkonzentrat vorhandenen Eiweißgehalts. Durch die erfindungsgemäße Rezirkulation des von dem Retentatstrom der Mikrofiltration separierten fettreduzierten Teilstroms wird eine deutliche Erhöhung der Eiweißausbeute im Permeatstrom der Mikrofiltration erreicht und dennoch der Fettanteil im Permeatstrom auf erwünscht niedrigen Werten gehalten. In der Praxis liegt diese Ausbeutesteigerung beispielsweise im Bereich von 5 bis 10 % des in dem zulaufenden Molkenproteinkonzentrat vorhandenen Eiweißanteils. Die Werte für die Ausbeutesteigerung und die Unterdrückung des Fettanteils hängen von der Rezirkulationsmenge ab. Insbesondere kann das erfindungsgemäße Verfahren mit zufriedenstellendem Erfolg ausgeführt werden, wenn die Menge des rezirkulierten Teilstroms beispielsweise im Bereich von 25 bis 75 % der Menge des separierten, fettreduzierten Teilstroms oder der Menge des Retentatstroms der Mikrofiltration liegt.

Der mit dem rezirkulierten Teilstrom rezirkulierte Restfettgehalt wird entsprechend dem für Fett geltenden Trenngrad der Mikrofiltration, also entsprechend deren natürlichem Entfettungsgrad, von der Mikrofiltrationsmembrane zurückgehalten, so daß in den Permeatstrom nur ein entsprechend geringer Bruchteil des Restfettgehalts übergeht. Beispielsweise liegt der natürliche Entfettungsgrad der Mikrofiltration im Bereich von 75 bis 80 %. Dann reduziert sich der in das Permeat übergehende Bruchteil auf einen Wert im Bereich von 20 bis 25 % des rezirkulierten Restfettgehalts.

Allerdings beträgt der Fettgehalt der Mikrofiltrationsretentate von Molke etwa das 8 bis 15fache des Fettgehaltes der Molke selbst. Bei diesen hohen Werten erlaubt die Erfindung eine wirtschaftliche Produktion in großem Maßstab, indem in der ersten Stufe eine Vorentfettung durchgeführt wird. Vorzugsweise wird dabei das beispielsweise einen Trokkenmassegehalt von 10 bis 20 % aufweisende Retentat auf einen Trockenmassegehalt von 5 bis 7 % reduziert. Hierfür kann als Verdünnungsmittel beispielsweise ein im Gesamtverfahrensablauf eines Molkereibetriebs aus einem Reversosmoseprozeß anfallendes Reversosmosepermeat verwendet werden. Dadurch wird eine für eine effiziente Entrahmung günstige Viskosität erreicht. Vor der Separierung in einem Entrahmungsseparator erfolgt eine Erwärmung auf 40 bis 50 °C. Der separierte erste fettabgereicherte Teilstrom aus dem Entrahmungsseparator wird in der zweiten Stufe durch chemisch-physikalische Einwirkung separiert. Aus dem dabei anfallenden zweiten fettabgereicherten Teilstrom wird die Rezirkulation zur Mikrofiltration gespeist. Aus dem ersten und dem zweiten fettangereicherten Teilstrom kann ein Phospholipidkonzentrat und daraus ein Phospholipidpulver gewonnen werden.

Zweckmäßigerweise ist vorgesehen, daß vor der Separation des zweiten fettabgereicherten Teilstroms der pH-Wert des der zweiten Stufe zugeführten Teilstroms eingestellt, der in seinem pH-Wert eingestellte Teilstrom erhitzt und die bivalente Metallionenkonzentration des erhitzten Teilstroms erhöht wird. Die Einstellung des pH-Wertes vor der Erhitzung und die Erhöhung der bivalenten Metallionenkonzentration nach der Erhitzung bewirken eine Aggregation der Restfettpartikel und erleichtern dadurch die Separation des fettabgereicherten Teilstroms. Die Separation wird weiterhin dadurch begünstigt, daß vorteilhaft der in seinem pH-Wert und seiner bivalenten Metallionenkonzentration eingestellte und erhitzte Teilstrom der Separation über eine Heißhaltestrecke zugeführt wird.

In der Praxis liegt zweckmäßigerweise die Verweilzeit in der Heißhaltestrecke im Bereich von zwei bis zehn Minuten. Ferner liegt die Erhitzungstemperatur des Teilstroms im Bereich von 50 bis 65 °C. Die Einstellung des pH-Wertes erfolgt auf einen Wert im Bereich von 6,4 bis 7,0 durch eine Zugabe von Lauge, beispielsweise Kalilauge oder Natronlauge. Die Erhöhung der bivalenten Metallionenkonzentration erfolgt durch eine Zugabe von Kalziumchlorid.

Vorzugsweise wird der zweite fettabgereicherte Teilstrom aus dem erhitzten Teilstrom mittels eines Tellerseparators absepariert. Der Tellerseparator kann als Zweiphasen-Separator ausgebildet sein, der auch als Klärseparator bezeichnet wird und dessen die leichte Phase austragender Austragsstrom den zweiten fettabgereicherten Teilstrom liefert. Alternativ kann der Tellerseparator ein Dreiphasen-Separator sein, der auch als Trennseparator bezeichnet wird und dessen die schwere Phase austragender Austragsstrom den zweiten fettabgereicherten Teilstrom liefert. Diese Möglichkeit bietet den Vorteil, noch nicht aggregierte Fettanteile als leichte Phase abzutrennen, und somit die Qualität des behandelten Retentats weiter zu erhöhen.

Im Rahmen der Erfindung ist ferner vorgesehen, daß das eiweißangereicherte Erzeugnis aus einem Retentatstrom einer weiteren Ultrafiltration gewonnen wird, der der Permeatstrom der Mikrofiltration als Zulaufstrom zugeführt wird. Durch die weitere Ultrafiltration wird der eiweißangereicherte und fettreduzierte Permeatstrom der Mikrofiltration weiter fraktioniert und gereinigt. Der Retentatstrom dieser weiteren Ultrafiltration liefert ein hoch eiweißangereichertes und stark fettreduziertes Erzeugnis, dessen Eiweißgehalt beispielsweise bei oder über 90 % liegt und dessen Fettgehalt kleiner als 1 % ist. Dieses Erzeugnis wird abkürzend auch als WPI (Whey Protein Isolate) bezeichnet.

In der folgenden Beschreibung wird die Erfindung unter Bezugnahme auf die Zeichnung beispielhaft erläutert. Hierin zeigen:
- Fig. 1: ein Blockschema eines Verfahrensablaufs, in dem die Erfindung angewendet wird,
- Fig. 2 (a) und 2 (b): detailliertere Darstellungen von Ausschnitten aus Fig. 1, und
- Fig. 3 (a) und 3 (b): je ein Schema zur Erläuterung der Separationswirkung in einem Klärseparator bzw. einem Trennseparator.

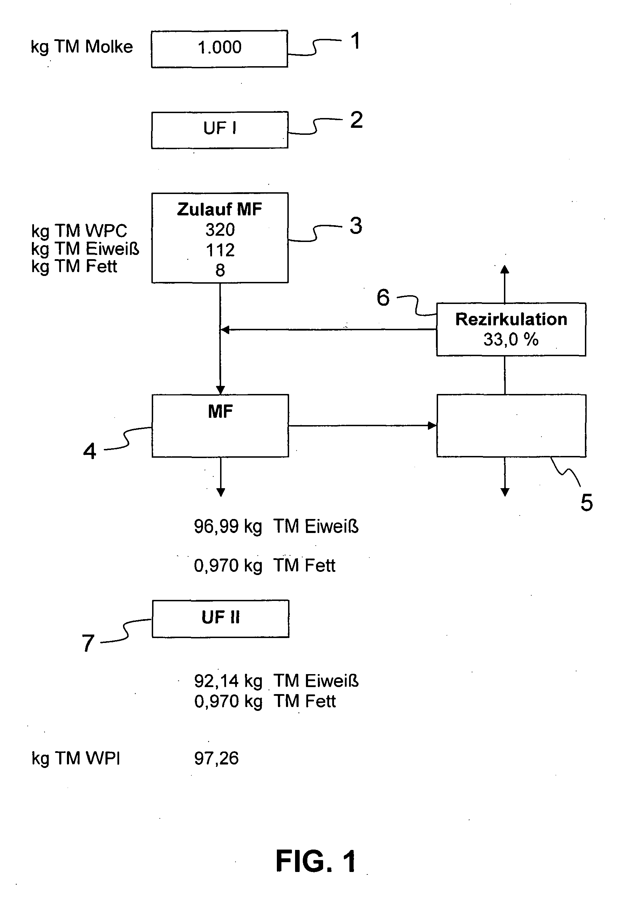

In Fig. 1 symbolisiert ein Block 1 Molke als Ausgangsprodukt des dargestellten Verfahrensablaufs. Zur Erläuterung der bei diesem Verfahrensablauf auftretenden Mengenbilanzen ist in dem Block 1 lediglich beispielhaft ein Gesamtdurchsatz von Molke mit einem Gehalt von 1.000 kg Trockenmasse (TM) angenommen. Die Molke wird einer Ultrafiltrationsstufe 2 zugeleitet, in der sie in ein Permeat und ein Retentat fraktioniert wird. Das Permeat dieser Ultrafiltration, in dem insbesondere die Laktose und Mineralstoffe der Molke angereichert sind, wird einer in Fig. 1 nicht dargestellten Weiterverwendung zugeführt.

In dem Retentat der Ultrafiltration sind die Molkenproteine angereichert. Außerdem enthält das Retentat einen Restanteil an Molkefett. Für dieses Molkenproteinkonzentrat, das abkürzend auch als "WPC" (Whey Protein Concentrate) bezeichnet wird, ist in dem Block 3 die sich aus der in Block 1 angegebenen Mengenbilanz unter praxisbezogenen Annahmen errechnende Mengenbilanz an WPC, nämlich 320 kg TM, angegeben. Hierin sind 112 kg TM Eiweiß und 8 kg TM Fett enthalten.

Das solchermaßen zusammengesetzte Molkenproteinkonzentrat wird als Zulaufstrom einer Mikrofiltrationsstufe 4 zugeführt. Bei dieser Mikrofiltration geht die Eiweißfraktion des zugeführten Molkenproteinkonzentrats größtenteils in das Permeat der Mikrofiltrationsstufe 4 über. Dagegen ist der Fettgehalt dieses Permeats stark reduziert.

Ein kleinerer Teil der Eiweißfraktion und ein größerer Teil der Fettfraktion gehen in das Retentat der Mikrofiltration über. In einer Separationsstufe 5 wird aus dem Retentatstrom der Mikrofiltrationsstufe 4 ein fettreduzierter Teilstrom separiert. Ein Block 6 symbolisiert die Rezirkulation eines Anteils dieses Teilstroms zum Zulauf der Mikrofiltrationsstufe 4. Die Größe dieses Anteils ist in dem Block 6 mit 33,0 % angegeben. Tatsächlich kann die Größe des Anteils in Abhängigkeit von den in der Praxis vorliegenden Umständen zur Einstellung einer optimalen Ausbeute in einem weiten Bereich variiert werden, beispielsweise im Bereich von 25 bis 75 % des in der Separationsstufe 5 abgetrennten fettreduzierten Teilstroms.

Mit dieser Rezirkulation errechnet sich für die in Fig. 1 beispielhaft zugrunde gelegte Mengenbilanz in dem Permeat der Mikrofiltrationsstufe 4 ein Gehalt von 96,99 kg TM Eiweiß und 0,97 kg TM Fett. Würde man dagegen den Prozeß ohne die Rezirkulation ablaufen lassen, enthielte das Permeat der Mikrofiltrationsstufe 4 nur 89,60 kg TM Eiweiß bei 0,4 kg TM Fett. Dies bedeutet eine Steigerung der Eiweißausbeute um 8,25 %. Gleichzeitig bleibt der prozentuale Fettgehalt noch unter einem für Ernährungszwecke erwünschten Grenzwert von 1 %.

In dem in Fig. 1 dargestellten Gesamtprozeß wird das Permeat der Mikrofiltrationsstufe 4 noch einer zur Reinigung und weiteren Fraktionierung dienenden Nachbehandlung unterzogen. Hierfür wird der Permeatstrom einer weiteren Ultrafiltrationsstufe 7 als Zulaufstrom zugeführt. Deren Retentatstrom liefert ein unmittelbar anwendbares, eiweißangereichertes Erzeugnis mit einem Eiweißgehalt von 90 % und einem Fettgehalt von 0,95 %. Ein solches Erzeugnis wird abkürzend als "WPI" (Whey Protein Isolate) bezeichnet.

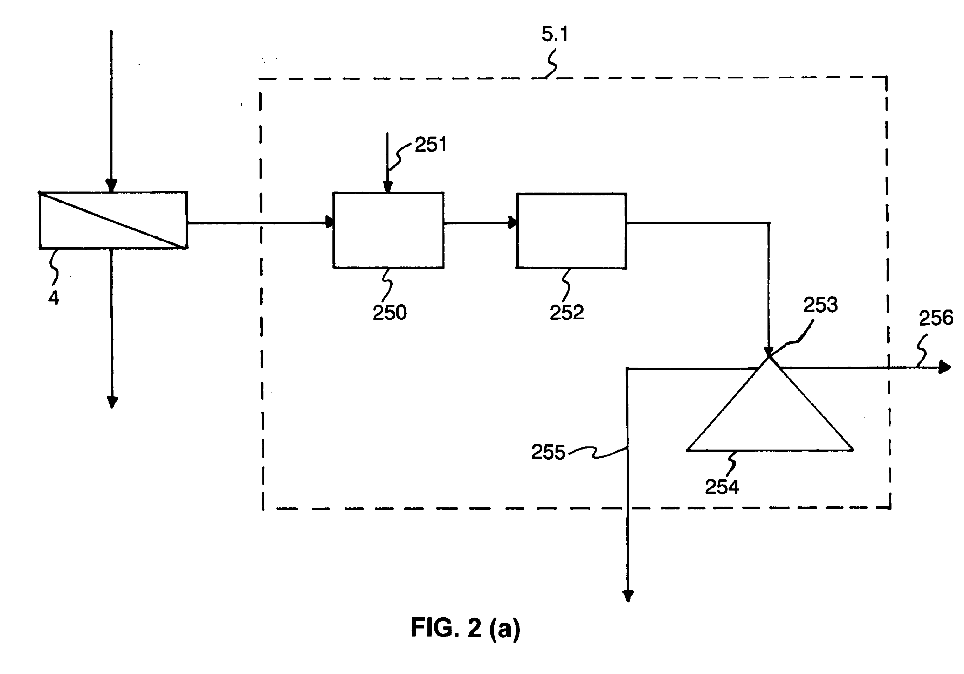

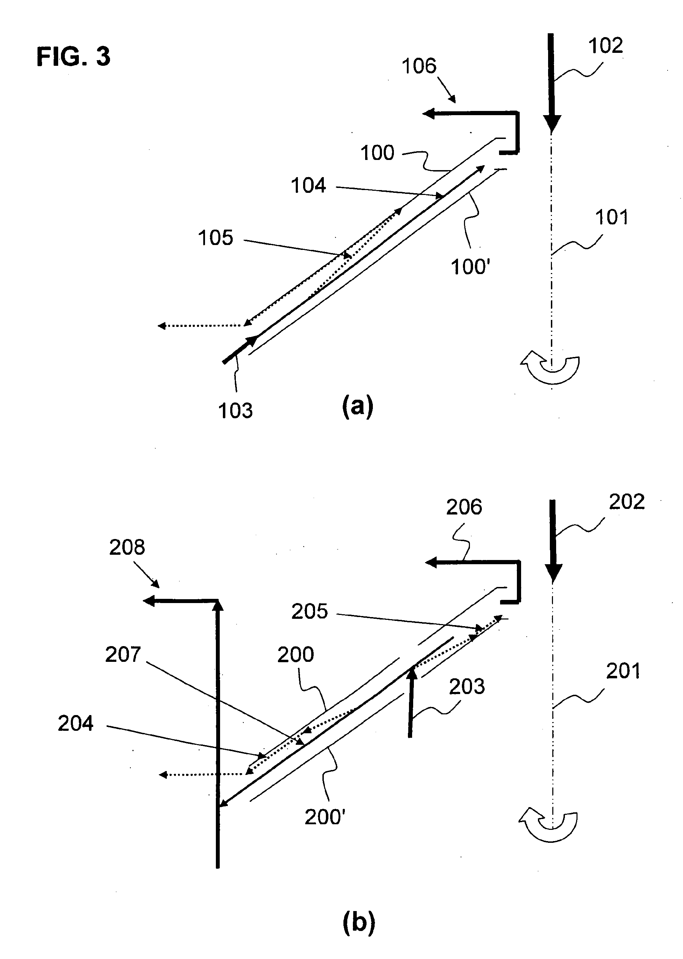

Fig. 2 (a) zeigt Einzelheiten einer Ausführungsform einer ersten Stufe 5.1 der Separationsstufe 5 in Fig. 1. In dieser Stufe 5.1 wird in einem Verfahrensschritt 250 der Trockenmassegehalt des mit einem Trockenmassegehalt von 10 bis 20 % zugeführten Retentatstroms der Mikrofiltrationsstufe 4 auf einen Trockenmassegehalt von 5 bis 7 % herabgesetzt. Dies geschieht beispielsweise durch die Zufuhr 251 von Wasser oder von Permeat aus einem Reversosmoseprozeß, der an einer anderen Stelle des Gesamtverfahrensablaufs eines Molkereibetriebs stattfindet. Das trockenmassereduzierte Permeat wird in einem folgenden Verfahrensschritt 252 auf 40 bis 55 °C angewärmt und anschließend dem Eingang 253 eines Entrahmungsseparators 254 zugeführt. Dessen Trennprinzip ist anhand von Fig. 3 (b) beispielhaft erläutert.

In dem Entrahmungsseparator 254 wird der zugeführte vorbehandelte Retentatstrom in einen ersten fettangereicherten Teilstrom 255 und einen ersten fettabgereicherten Teilstrom 256 separiert.

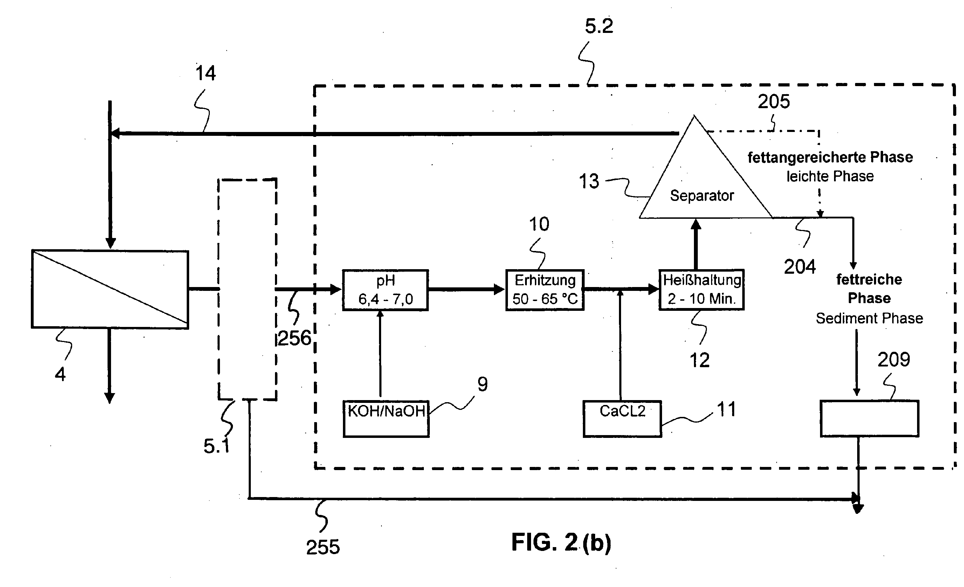

In Fig. 2 (b) ist innerhalb eines durch eine gestrichelte Linie umrahmten Bereichs eine Ausführungsform einer zweiten Stufe 5.2 der Separationsstufe 5 in Fig. 1 in weiteren Einzelheiten veranschaulicht. Aus dieser Darstellung geht hervor, daß der pH-Wert des aus der ersten Stufe 5.1 zugeführten ersten fettabgereicherten Teilstroms 256 durch eine Zugabe von Lauge, beispielsweise Kalilauge und/oder Natronlauge, aus einem Behälter 9 auf einen Wert im Bereich von 6,4 bis 7,0 erhöht wird. Die Temperatur des solchermaßen pHeingestellten Teilstroms wird, beispielsweise im Durchlauf durch einen Plattenwärmeaustauscher 10, auf einen Temperaturwert im Bereich von 50 bis 65 °C erhitzt. Die bivalente Metallionenkonzentration des solchermaßen erhitzten Teilstroms wird durch Zugabe von Kalziumchlorid aus einem Behälter 11 erhöht. Der solchermaßen erhitzte Teilstrom erfährt, beispielsweise im Durchlauf durch eine Heißhaltestrecke 12, eine Heißhaltezeit von zwei bis zehn Minuten. Danach wird von dem heißgehaltenen Teilstrom in einem Separator 13 ein zweiter fettabgereicherter Teilstrom 14 separiert, der zum Zulauf der Mikrofiltrationsstufe 4 rezirkuliert wird.

Der Tellerseparator kann ein Zweiphasen-Separator, der auch als Klärseparator bezeichnet wird, oder ein Dreiphasen-Separator, der auch als Trennseparator bezeichnet wird, sein. Das Funktionsprinzip der ersten Alternative ist in Fig. 3 (a) dargestellt, das der zweiten Alternative in Fig. 3 (b).

In Fig. 3 (a) sind schematisch zwei übereinanderliegende Teller 100, 100' des um die vertikale Rotationsachse 101 rotierenden Tellerpaketes des Klärseparators dargestellt. Das zu separierende, heißgehaltene Retentat wird in der Richtung des Pfeiles 102 axial von oben zugeführt und läuft dann von unten in der Richtung des Pfeils 103 in den zwischen den beiden Tellern 100, 100' begrenzten Tellerspalt ein. Während seines Durchlaufs durch den Tellerspalt längs des Weges 104 wird durch die Einwirkung der Zentrifugalkraft die fettreiche Phase absepariert und wandert längs des Weges 105 zu dem in Fig. 3 (a) oberen Teller 100. Von dort gelangt es längs des Tellers 100 nach unten und wird schließlich von dem unteren Ende des Tellerspaltes entweder kontinuierlich durch Düsen oder diskontinuierlich durch zeitlich gesteuerte Entleerungen ausgetragen.

Am oberen Ende des Tellerspaltes wird die leichte, fettarme Phase 106 ausgetragen, die in Teilströmen zur Mikrofiltrationsstufe 4 rezirkuliert wird.

Beim Trennseparator, dessen Funktionsprinzip in Fig. 3 (b) schematisch veranschaulicht ist, erfolgt der Zulauf ebenfalls längs der Rotationsachse 201 des rotierenden Tellerpakets axial von oben in der Richtung des Pfeils 202. In den Tellern 200, 200' des Tellerpakets sind übereinanderliegende Öffnungen ausgebildet, die einen Steigkanal bilden. Durch diesen Steigkanal läuft das zulaufende, heißgehaltene Retentat längs des Pfeils 203 vertikal von unten nach oben in die zwischen den Tellern 200, 200' begrenzten Tellerspalte ein. Unter der Wirkung der Zentrifugalkraft wird eine fettreiche Phase in Richtung auf den in Fig. 3 (b) oberen Teller 200 abgetrennt und wandert an dessen Wandung längs eines Weges 204 zum unteren Ende des Tellerspaltes, wo sie entweder kontinuierlich durch Düsen oder diskontinuierlich durch zeitlich gesteuerte Entleerungen ausgetragen wird. Ferner wird eine fettangereicherte Phase in Richtung auf den in Fig. 3 (b) unteren Teller 200' absepariert und wandert an dessen Wandung längs eines Weges 205 zum oberen Ende des Tellerspaltes. Dort wird diese fettangereicherte, leichte Phase als kontinuierlicher Strom 206 ausgetragen. Die verbleibende fettarme Phase verläßt den Tellerspalt an dessen unterem Ende längs des Weges 207 als schwere Phase und wird als kontinuierlicher Strom 208 ausgetragen, welcher in Teilströmen zur Mikrofiltrationsstufe 4 rezirkuliert wird.

In Fig. 2 (b) ist der Separator 13 beispielhaft als derartiger Trennseparator veranschaulicht. Der rezirkulierte Teilstrom 14 in Fig. 2 stellt die fettarme Phase des Trennseparators dar. Die Wege 204 und 205 der fettreichen bzw. fettangereicherten Phase liefern einen zweiten fettangereicherten Teilstrom 209. Von dort aus werden diese Phasen einer nicht dargestellten weiteren Verarbeitung in ein Phospholipidkonzentrat, aus dem schließlich ein Phospholipidpulver gewonnen wird, zugeführt. Dieser Verarbeitung wird auch der in der ersten Stufe 5.1 abseparierte erste fettangereicherte Teilstrom 255 zugeführt. Ebenfalls nicht dargestellt ist der Weg des Permeats der weiteren Ultrafiltrationsstufe 7 und dessen weitere Verwendung.

### Verzeichnis der Bezugszeichen

- 1: Block (Molke)
- 2: Ultrafiltrationsstufe
- 3: Block
- 4: Mikrofiltrationsstufe
- 5: Separationsstufe
- 5.1: erste Stufe
- 5.2: zweite Stufe
- 6: Rezirkulation
- 7: weitere Ultrafiltrationsstufe
- 9: Behälter
- 10: Plattenwärmeaustauscher
- 11: Behälter
- 12: Heißhaltestrecke
- 13: Tellerseparator
- 14: fettreduzierter Teilstrom/zweiter fettabgereicherter Teilstrom/rezirkulierter Teilstrom
- 100, 100': Teller
- 101: Rotationsachse
- 102: Pfeil
- 103: Pfeil
- 104: Weg
- 105: Weg der fettreichen Phase
- 106: leichte, fettarme Phase
- 200,200': Teller
- 201: Rotationsachse
- 202: Pfeil
- 203: Pfeil
- 204: Weg der fettreichen Phase
- 205: Weg der fettangereicherten Phase
- 206: kontinuierlicher Strom
- 207: Weg
- 208: kontinuierlicher Strom
- 209: zweiter fettangereicherter Teilstrom
- 250: Verfahrensschritt
- 251: Zufuhr
- 252: Verfahrensschritt
- 253: Eingang
- 254: Entrahmungsseparator
- 255: erster fettangereicherter Teilstrom
- 256: erster fettabgereicherter Teilstrom

## Patentansprüche

1. Verfahren zur Gewinnung eines Inhaltsstoffes aus einem als Retentat einer Ultrafiltration von Molke gewonnenen Molkenproteinkonzentrat, bei dem das Molkenproteinkonzentrat als Zulaufstrom einer Mikrofiltration (4) zugeführt und aus deren Retentatstrom ein fettreduzierter Teilstrom (14) separiert und mindestens teilweise zu der Mikrofiltration (4) rezirkuliert (6) wird, **dadurch gekennzeichnet, daß** der Retentatstrom in einer ersten Stufe (5.1) in einen ersten fettangereicherten Teilstrom (255) und einen ersten fettabgereicherten Teilstrom (256) separiert, der erste fettabgereicherte Teilstrom (256) in einer zweiten Stufe (5.2) in einen zweiten fettangereicherten Teilstrom (209) und einen zweiten fettabgereicherten Teilstrom (14) separiert und der rezirkulierte Teilstrom aus dem zweiten (14) oder aus dem ersten (256) und dem zweiten (14) fettabgereicherten Teilstrom gespeist wird.

2. Verfahren nach Anspruch 1, **dadurch gekennzeichnet, daß** der Trockenmassegehalt des Retentatstroms vor der ersten Stufe (5.1) auf 5 bis 7 % eingestellt wird.

3. Verfahren nach Anspruch 2, **dadurch gekennzeichnet, daß** die Einstellung des Trockenmassegehalts durch Verdünnen des Retentatstroms, vorzugsweise mit Permeat einer Reversosmose, erfolgt.

4. Verfahren nach Anspruch 2 oder 3, **dadurch gekennzeichnet, daß** der in der Trockenmasse eingestellte Retentatstrom vor seiner Separierung auf 40 bis 55°C erwärmt wird.

5. Verfahren nach einem der Ansprüche 1 bis 4, **dadurch gekennzeichnet, daß** aus dem ersten und/oder dem zweiten fettangereicherten Teilstrom ein Phospholipidkonzentrat gewonnen wird.

6. Verfahren nach Anspruch 5, **dadurch gekennzeichnet, daß** aus dem Phospholipidkonzentrat ein Phospholipidpulver gewonnen wird.

7. Verfahren nach einem der Ansprüche 1 bis 6, **dadurch gekennzeichnet, daß** aus dem Permeatstrom der Mikrofiltration (4) ein eiweißangereichertes Erzeugnis gewonnen wird.

8. Verfahren nach einem der Ansprüche 1 bis 7, **dadurch gekennzeichnet, daß** die Menge des rezirkulierten Teilstroms (14) im Bereich von 25 bis 75 % der Menge des separierten Teilstroms liegt.

9. Verfahren nach einem der Ansprüche 1 bis 8, **dadurch gekennzeichnet, daß** der mit dem rezirkulierten Teilstrom (14) rezirkulierte Restfettgehalt durch die Mikrofiltration (4) in deren Permeatstrom auf einen ihrem natürlichen Entfettungsgrad entsprechenden Bruchteil reduziert wird.

10. Verfahren nach Anspruch 9, **dadurch gekennzeichnet, daß** der natürliche Entfettungsgrad der Mikrofiltration (4) im Bereich von 75 bis 80 % und der in ihr Permeat übergehende Bruchteil des rezirkulierten Restfettgehalts im Bereich von 20 bis 25 % liegt.

11. Verfahren nach einem der Ansprüche 1 bis 10, **dadurch gekennzeichnet, daß** in der zweiten Stufe (5.2) vor der Separation der pH-Wert des ihr zugeführten Teilstroms eingestellt, der in seinem pH-Wert eingestellte Teilstrom erhitzt (10) und die bivalente Metallionenkonzentration des erhitzten Teilstroms erhöht wird.

12. Verfahren nach Anspruch 11, **dadurch gekennzeichnet, daß** die Erhitzungstemperatur des Teilstroms im Bereich von 50 bis 65 °C liegt.

13. Verfahren nach Anspruch 11 oder 12, **dadurch gekennzeichnet, daß** der erhitzte Teilstrom durch eine Heißhaltestrecke (12) geführt wird.

14. Verfahren nach einem der Ansprüche 11 bis 13, **dadurch gekennzeichnet, daß** die Einstellung des pH-Wertes durch eine Zugabe von Lauge (9) erfolgt.

15. Verfahren nach einem der Ansprüche 11 bis 14, **dadurch gekennzeichnet, daß** die Einstellung des pH-Wertes auf einen Wert im Bereich von 6,4 bis 7,0 erfolgt.

16. Verfahren nach einem der Ansprüche 11 bis 15, **dadurch gekennzeichnet, daß** die Erhöhung der bivalenten Metallionenkonzentration durch eine Zugabe von Calciumchlorid (11) erfolgt.

17. Verfahren nach einem der Ansprüche 11 bis 16, **dadurch gekennzeichnet, daß** der fettreduzierte Teilstrom (14) aus einem Austragsstrom eines Tellerseparators (13) entnommen wird, dem der erhitzte Retentatstrom als Zulaufstrom zugeführt wird.

18. Verfahren nach Anspruch 17, **dadurch gekennzeichnet, daß** der Tellerseparator (13) ein Zweiphasen-Separator ist, dessen die leichte Phase (106) austragender Austragsstrom den fettreduzierten Teilstrom (14) liefert.

19. Verfahren nach Anspruch 17, **dadurch gekennzeichnet, daß** der Tellerseparator (13) ein Dreiphasen-Separator ist, dessen die schwere Phase austragender Austragsstrom (208) den fettreduzierten Teilstrom (14) liefert.

20. Verfahren nach einem der Ansprüche 7 bis 19, **dadurch gekennzeichnet, daß** das eiweißangereicherte Erzeugnis aus einem Retentatstrom einer weiteren Ultrafiltration (7) gewonnen wird, der der Permeatstrom der Mikrofiltration (4) als Zulaufstrom zugeführt wird.

## Claims

1. A process for obtaining a constituent from a whey protein concentrate obtained as a retentate from ultrafiltration of whey, wherein the whey protein concentrate is supplied as a feed stream to a microfiltration (4) and from the retentate stream of which a reduced-fat substream (14) is separated and is at least partially recirculated (6) into the microfiltration (4), **characterised in that**, in a first stage (5.1), the retentate stream is separated into a first fat-enriched substream (255) and a first fat-depleted substream (256), in a second stage (5.2) the first fat-depleted substream (256) is separated into a second fat-enriched substream (209) and a second fat-depleted substream (14) and that the recirculated substream is fed from the second (14) or from the first (256) and the second (14) fat-depleted substream.

2. The process according to Claim 1, **characterised in that** the dry matter content of the retentate stream is adjusted to 5 to 7 % ahead of the first stage (5.1).

3. The process according to Claim 2, **characterised in that** the adjustment of the dry matter content takes place by diluting the retentate stream, preferably using a permeate from reverse osmosis.

4. The process according to Claim 2 or 3, **characterised in that** the dry matter-adjusted retentate stream is heated to 40 to 55°C prior to its separation.

5. The process according to any of Claims 1 to 4, **characterised in that** a phospholipid concentrate is obtained from the first and/or the second fat-enriched substream.

6. The process according to Claim 5, **characterised in that** a phospholipid powder is obtained from the phospholipid concentrate.

7. The process according to any of Claims 1 to 6, **characterised in that** an albumen-enriched product is obtained from the permeate stream from the microfiltration (4).

8. The process according to any of Claims 1 to 7, **characterised in that** the quantity of the recirculated substream (14) is in the range of 25 to 75 % of the quantity of the separated substream.

9. The process according to any of Claims 1 to 8, **characterised in that** the residual fat content recirculated with the recirculated substream (14) is reduced by microfiltration (4), in the permeate stream of the latter, to a fraction that corresponds to its natural degree of defatting.

10. The process according to Claim 9, **characterised in that** the natural degree of defatting of microfiltration (4) is in the range of 75 to 80 % and that the fraction of the recirculated residual fat content passing into its permeate is in the range of 20 to 25 %.

11. The process according to any of Claims 1 to 10, **characterised in that** in the second stage (5.2) prior to separation, the pH value of the substream supplied to it is adjusted, the pH-adjusted substream is heated (10) and the bivalent metal ion concentration of the heated substream is increased.

12. The process according to Claim 11, **characterised in that** the heating temperature of the substream is in the range from 50 to 65°C.

13. The process according to Claim 11 or 12, **characterised in that** the heated substream is passed through a temperature holding line (12).

14. The process according to any of Claims 11 to 13, **characterised in that** the adjustment of the pH value takes place by adding a lye (9).

15. The process according to any of Claims 11 to 14, **characterised in that** the adjustment of the pH value to a value in the range of 6.4 to 7.0 takes place.

16. The process according to any of Claims 11 to 15, **characterised in that** the increase in the bivalent metal ion concentration takes place by adding calcium chloride (11).

17. The process according to any of Claims 11 to 16, **characterised in that** the reduced-fat substream (14) is taken from a discharge stream of a plate separator (13) to which the heated retentate stream is supplied as a feed stream.

18. The process according to Claim 17, **characterised in that** the plate separator (13) is a two-phase separator the discharge stream of which that discharges the light phase (106) supplies the reduced-fat substream (14).

19. The process according to Claim 17, **characterised in that** the plate separator (13) is a three-phase separator, the discharge stream (208) of which that discharges the heavy phase supplies the reduced-fat substream (14).

20. The process according to any of Claims 7 to 19, **characterised in that** the albumen-enriched product is obtained from a retentate stream of further ultrafiltration (7) to which the permeate stream from microfiltration (4) is supplied as a feed stream.

## Revendications

1. Procédé d'obtention d'un composant à partir d'un concentré de protéines de lactosérum produit sous la forme d'un rétentat d'ultrafiltration de lactosérum, dans lequel le concentré de protéines de lactosérum est apporté à une microfiltration (4) sous la forme d'un courant d'alimentation et un courant partiel appauvri en matières grasses (14) est séparé du courant de rétentat de celle-ci et fait l'objet, au moins partiellement, d'une recirculation (6) vers la microfiltration, **caractérisé en ce que** le courant de rétentat est séparé, dans une première étape (5.1), en un premier courant partiel enrichi en matières grasses (255) et un premier courant partiel appauvri en matières grasses (256), le premier courant partiel appauvri en matières grasses (256) est séparé, dans une seconde étape (5.2), en un deuxième courant partiel enrichi en matières grasses (209) et un deuxième courant partiel appauvri en matières grasses (14) et le courant partiel recirculé à partir du deuxième (14) ou du premier (256) et du deuxième (14) courant partiel appauvri en matières grasses est apporté.

2. Procédé selon la revendication 1, **caractérisé en ce que** la teneur en matière sèche du courant de rétentat est ajustée, avant la première étape (5.1), à une valeur entre 5 et 7 %.

3. Procédé selon la revendication 2, **caractérisé en ce que** l'ajustement de la teneur en matière sèche s'effectue par dilution du courant de rétentat, de préférence à l'aide d'un perméat issu d'une osmose inverse.

4. Procédé selon la revendication 2 ou 3, **caractérisé en ce que** le courant de rétentat ajusté en termes de matière sèche est porté à une température allant de 40 à 55 °C avant sa séparation.

5. Procédé selon l'une quelconque des revendications 1 à 4, **caractérisé en ce qu'**un concentré de phospholipides est produit à partir du premier et/ou du deuxième courant partiel enrichi en matières grasses.

6. Procédé selon la revendication 5, **caractérisé en ce qu'**une poudre de phospholipides est produite à partir du concentré de phospholipides.

7. Procédé selon l'une quelconque des revendications 1 à 6, **caractérisé en ce qu'**un produit enrichi en protéines est tiré du courant de perméat de la microfiltration (4).

8. Procédé selon l'une quelconque des revendications 1 à 7, **caractérisé en ce que** la quantité de courant partiel (14) recirculé se situe dans la plage allant de 25 à 75 % de la quantité de courant partiel séparé.

9. Procédé selon l'une quelconque des revendications 1 à 8, **caractérisé en ce que** la teneur en matières grasses résiduelles recirculée avec le courant partiel (14) recirculé est réduite par la microfiltration (4) dans son courant de perméat pour atteindre une fraction correspondant à son degré de dégraissage naturel.

10. Procédé selon la revendication 9, **caractérisé en ce que** le degré de dégraissage naturel de la microfiltration (4) se situe dans la plage allant de 75 à 80 % et la fraction de la teneur en matières grasses résiduelles recirculée passant dans son perméat se situe dans la plage allant de 20 à 25 %.

11. Procédé selon l'une quelconque des revendications 1 à 10, **caractérisé en ce que**, dans la seconde étape (5.2) précédant la séparation, le pH du courant partiel qui lui est apporté est ajusté, le courant partiel à pH ajusté est chauffé (10) et la concentration en ions métalliques bivalents du courant partiel chauffé est intensifiée.

12. Procédé selon la revendication 11, **caractérisé en ce que** la température de chauffé du courant partiel se situe dans la plage allant de 50 à 65 °C.

13. Procédé selon la revendication 11 ou 12, **caractérisé en ce que** le courant partiel chauffé est conduit dans une section de maintien en température (12).

14. Procédé selon l'une quelconque des revendications 11 à 13, **caractérisé en ce que** l'ajustement du pH s'effectue par ajout de lessive (9).

15. Procédé selon l'une quelconque des revendications 11 à 14, **caractérisé en ce que** l'ajustement du pH permet d'atteindre une valeur de l'ordre de 6,4 à 7,0.

16. Procédé selon l'une quelconque des revendications 11 à 15, **caractérisé en ce que** l'intensification de la concentration en ions métalliques bivalents s'effectue par ajout de chlorure de calcium (11).

17. Procédé selon l'une quelconque des revendications 11 à 16, **caractérisé en ce que** le courant partiel appauvri en matières grasses (14) est tiré d'un courant de sortie issu d'un séparateur à disques (13) auquel le courant de rétentat chauffé est apporté en tant que courant d'alimentation.

18. Procédé selon la revendication 17, **caractérisé en ce que** le séparateur à disques (13) consiste en un séparateur à deux phases dont le courant de sortie porteur de la phase légère (106) fournit le courant partiel appauvri en matières grasses (14).

19. Procédé selon la revendication 17, **caractérisé en ce que** le séparateur à disques (13) consiste en un séparateur à trois phases dont le courant de sortie (208) porteur de la phase lourde fournit le courant partiel appauvri en matières grasses (14).

20. Procédé selon l'une quelconque des revendications 7 à 19, **caractérisé en ce que** le produit enrichi en protéines est produit à partir d'un courant de rétentat d'une ultrafiltration supplémentaire (7) à laquelle est apporté le courant de perméat de la microfiltration (4) en tant que courant d'alimentation.
